# DEMANDE DE BREVET EUROPEEN

(11) **EP 1 792 758 A1**
(43) Date de publication de la demande: **06.06.2007**
(21) Numéro de dépôt: 06301210.8
(22) Date de dépôt: 04.12.2006
(51) Int. Cl.: B60G 7/04

(54) **Dispositif formant butée de détente d'une suspension d'un véhicule notamment automobile**

(30) Priorité: 05.12.2005 FR 0553724
(71) Demandeur: Peugeot Citroen Automobiles SA, 78140 Vélizy-Villacoublay (FR)
(72) Inventeur: Roy, Franck, 91700, FLEURY MEROGIS (FR)

(57) **Abrégé**

La présente invention concerne un dispositif formant butée de détente d'une suspension d'un véhicule notamment automobile, comprenant un lien souple (8) interposé entre la caisse du véhicule et un élément de la masse non suspendue du système de liaison au sol du véhicule.

Selon l'invention, le lien souple (8) est apte à exercer un effort de traction sur un moyen (6) comprimant l'élément élastiquement déformable (7) lors des débattements en détente de la roue (R), et le lien souple (8) est associé à un élément élastique (23) permettant au lien (8) de se rétracter dans un volume restreint prédéterminé lors des débattements en attaque de la roue du véhicule.

L'invention trouve application dans le domaine de l'automobile.

## Description

La présente invention concerne un dispositif formant butée de détente d'une suspension d'un véhicule notamment automobile.

Une suspension de véhicule comporte d'une manière générale un bras de suspension reliant la roue à la caisse du véhicule et un ensemble à ressort et amortisseur assurant des fonctions de raideur et d'amortissement. La suspension permet notamment le débattement guidé de la roue, à partir de sa position de référence en statique, d'une part pendant une phase d'attaque à une position extrême haute dans le passage de roue dite de compression maximum et d'autre part pendant une phase de détente à une position extrême basse dite de détente maximum.

Lorsque la roue du véhicule débat à sa position de compression ou de détente maximum, sous l'effet par exemple d'une irrégularité de la route sur laquelle se déplace le véhicule, l'arrêt du débattement de la roue produit un choc nuisible au confort du véhicule.

Afin d'absorber les chocs et réduire les bruits conséquents, on utilise des butées de détente et d'attaque.

Les butées de détente sont généralement constituées par un tampon à base de caoutchouc ou de polyuréthanne solidaire de l'un des éléments du véhicule, soit la caisse, soit le train arrière de celui-ci. Ces butées de détente sont de relativement faible épaisseur et disposées en un emplacement entre caisse et train arrière du véhicule peu gênant pour les autres éléments mécaniques environnants et elles agissent en fin de course de détente du train arrière pour l'absorption des chocs et la réduction des bruits.

Il est en outre connu du document US 3 721 457 un dispositif formant butée de détente d'un train à essieu rigide de véhicule automobile, du type comprenant un ressort disposé dans le soubassement de la caisse du véhicule, et un câble interposé entre la caisse et l'essieu rigide du véhicule, le câble exerçant un effort de traction sur le ressort lors des débattements en détente de la roue du véhicule.

Néanmoins, lors d'un débattement en attaque de la roue, le câble se détend et prend une configuration complexe présentant des brins et/ou des boucles éloignés de la position du câble au repos, ladite position correspondant à la configuration où le câble est sensiblement tendu. Ainsi, ce câble peut percuter des organes environnants, voire se coincer et/ou se rompre. Cet inconvénient est d'autant plus majeur lorsque la butée est disposée dans un environnement encombré, tel qu'à l'intérieur d'un ressort de suspension.

Une telle butée est ainsi limitée au système de suspension offrant un espace disponible et n'est donc pas implantable pour l'ensemble des trains arrière existant actuellement sur le marché.

La présente invention a pour but d'éliminer les inconvénients ci-dessus en proposant un dispositif mécanique formant butée de détente qui soit indépendant de l'architecture des trains arrière de véhicules, afin de favoriser son implantation sur le véhicule quelle que soit cette architecture, de gérer spécifiquement la détente des trains arrière, comme lors de débattements en attaque du train, et d'améliorer les performances dynamiques du véhicule ainsi que la sécurité de celui-ci.

A cet effet, selon l'invention, le dispositif formant butée de détente d'une suspension d'un véhicule notamment automobile, est du type comprenant un élément élastiquement déformable disposé dans le soubassement de la caisse du véhicule, comprenant un lien souple interposé selon un axe entre la caisse du véhicule et un élément de la masse non suspendue du système de liaison au sol du véhicule, caractérisé en ce que le lien souple est apte à exercer un effort de traction sur un moyen comprimant l'élément élastiquement déformable lors des débattements en détente de la roue du véhicule et en ce que le lien souple est associé à un élément élastique permettant au lien de se rétracter dans un volume restreint prédéterminé autour de son axe lors des débattements en attaque de la roue (R) et de s'allonger lors de la traction exercée par le lien sur le moyen de compression de l'élément élastiquement déformable lors des débattements en détente de la roue.

Conformément à d'autres caractéristiques avantageuses de l'invention :
- l'élément élastique est formé d'une bande en matériau élastique, s'étendant sur tout ou partie du lien, et présentant au moins deux zones de fixation espacées sur ledit lien ;
- le lien est constitué d'un tressage de fils, lesdites zones de l'élément élastique étant cousus sur ledit lien ;
- le lien souple est une sangle ou un câble en acier ;
- le nombre de zones de l'élément élastique et l'espacement entre lesdites zones sont prédéterminés afin que le lien puisse tenir, en position rétractée, dans un volume cylindrique centré sur l'axe de diamètre prédéterminé ;
- le lien souple occupe une position détendue rétractée, approximativement en lacet ou en accordéon, lors des débattements en attaque de la roue et se tend à une valeur déterminée de la détente de la roue à laquelle l'élément élastiquement déformable doit commencer à se comprimer. Avantageusement, la valeur déterminée est fonction de la course de débattement du train arrière du véhicule.

L'élément élastiquement déformable est disposé dans un plan sensiblement parallèle au plan de débattement de la roue.

Cet élément élastiquement déformable est un corps de révolution en matériau élastiquement déformable à base de caoutchouc ou à base de polyuréthane.

Selon un mode de réalisation, le dispositif comprend également un cylindre solidaire de la caisse du véhicule, notamment d'un longeron de la caisse du véhicule, un piston monté à coulissement dans le cylindre et constituant le moyen de compression de l'élément élastiquement déformable qui est logé dans le cylindre entre le piston et la paroi de fond inférieure du cylindre.

Selon une variante de réalisation, le lien traverse le cylindre et l'élément élastiquement déformable en ayant l'une de ses extrémités reliée au piston et son extrémité opposée solidaire de l'élément de la masse non suspendue.

Selon une variante de réalisation, le piston est solidaire d'une tige traversant l'élément élastiquement déformable et dont l'extrémité inférieure sortant du cylindre est reliée à l'extrémité correspondante du lien.

Selon un autre mode de réalisation, le lien est solidaire de la caisse du véhicule, notamment d'un longeron de la caisse, l'élément élastiquement déformable est fixé sous l'élément de la masse non suspendue, et le moyen de compression de l'élément élastiquement déformable est constitué par une plaque en appui sur l'extrémité inférieure de ce dernier, le lien traversant l'élément élastiquement déformable.

Selon encore un autre mode de réalisation, le lien souple est solidaire de l'élément de la masse non suspendue par l'une de ses extrémités et son extrémité opposée est fixée articulée à l'extrémité d'un bras de levier articulé à un longeron de la caisse du véhicule et l'élément élastiquement déformable est disposé entre l'extrémité opposée du bras de levier et le longeron, cette extrémité opposée du bras de levier constituant le moyen de compression de l'élément élastiquement déformable.

Le dispositif formant butée de détente est implanté d'un côté du véhicule dans une zone relativement proche du plan vertical passant par l'axe reliant les centres de roues du véhicule et écartée autant que possible du plan médian longitudinal du véhicule.

Selon un mode de réalisation, le dispositif formant butée de détente est logé dans un ressort de suspension interposé entre la caisse et l'élément de la masse non suspendue, tel qu'un bras reliant une roue à la caisse du véhicule ou une traverse déformable d'un train arrière de ce véhicule.

Selon un autre mode de réalisation, le dispositif formant butée de détente est implanté entre la caisse du véhicule et une traverse d'un train arrière rigide à proximité de la liaison de la traverse à un ressort à lame de suspension de ce véhicule.

L'invention vise également un véhicule, notamment automobile, dont le train arrière est équipé d'au moins un dispositif formant butée de détente conforme à la description qui en a été faite précédemment.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 représente le dispositif formant butée de l'invention suivant un premier mode de réalisation;
- la figure 2 représente le dispositif formant butée de l'invention suivant un second mode de réalisation;
- la figure 3 représente le dispositif formant butée de détente de l'invention suivant un troisième mode de réalisation;
- la figure 4 représente le dispositif formant butée de détente de l'invention suivant un quatrième mode de réalisation;
- la figure 5 représente la courbe d'un effort de traction appliqué à une sangle de compression de la butée de détente de l'invention;
- les figures 6 et 7 représentent les débattements respectivement d'un train arrière à butée de détente connue et d'un train arrière à butée de détente conforme à l'invention ;
- la figure 8 est une vue partielle en perspective représentant l'implantation du dispositif formant butée de détente de l'invention dans un ressort de suspension d'un train arrière à traverse déformable d'un véhicule ;
- la figure 9 est une vue complète en coupe longitudinal du dispositif formant butée de détente de la figure 8 en position de compression du train arrière ;
- la figure 10 est une vue semblable à celle de la figure 9 et représentant le dispositif formant butée de détente en position de détente du train ;
- la figure 11 représente une variante de réalisation de liaison de la sangle à un piston du dispositif formant butée de détente de l'invention ;
- la figure 12 est une vue en perspective de la sangle en position tendue lors de la phase de détente ;
- la figure 13 est une vue de la sangle en position détendue lors de la phase d'attaque ;
- la figure 14 est une vue de dessus d'un train arrière à traverse déformable de véhicule automobile et représentant la zone d'implantation du dispositif formant butée de détente de l'invention ;
- la figure 15 représente l'application du dispositif formant butée de détente de l'invention à un véhicule comportant un train arrière rigide ;
- la figure 16 est une vue en perspective éclatée de certains des éléments du train arrière dans la partie cerclée en XIV de la figure 15 ;
- la figure 17 est une vue en perspective agrandie de côté suivant la flèche XVII de la figure 16 ;
- la figure 18 est une vue en perspective de moyens permettant de fixer le dispositif formant butée de l'invention à la traverse rigide du train arrière de la figure 13 ; et
- la figure 19 représente en perspective une partie du véhicule de la figure 15 à laquelle est fixé le dispositif formant butée de détente de l'invention.

Le dispositif formant butée de l'invention qui va être décrit s'applique à tout type de train, notamment arrière, de véhicule automobile à bras tirés, multibras, à traverse déformable ou rigide.

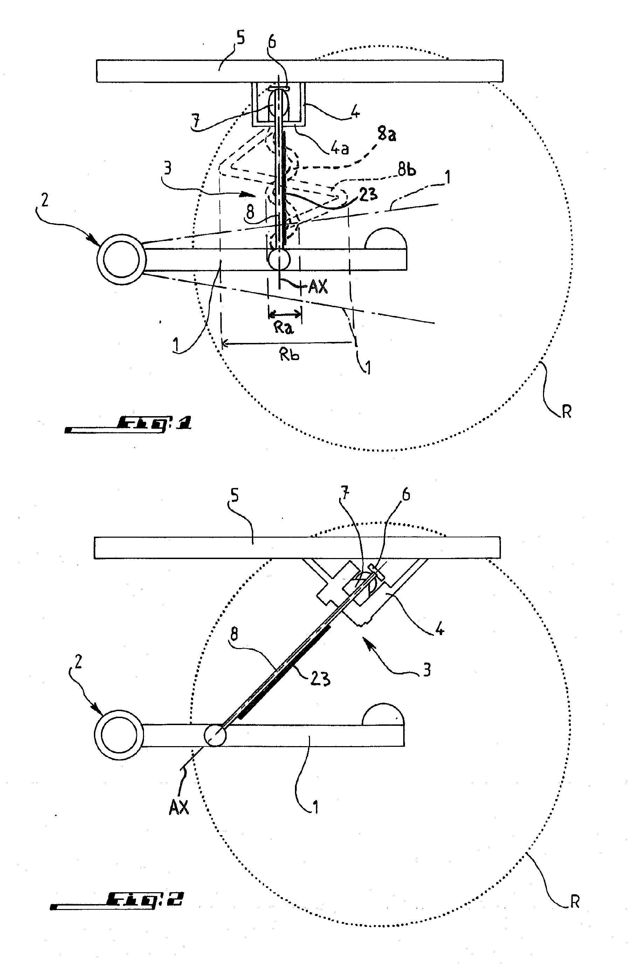

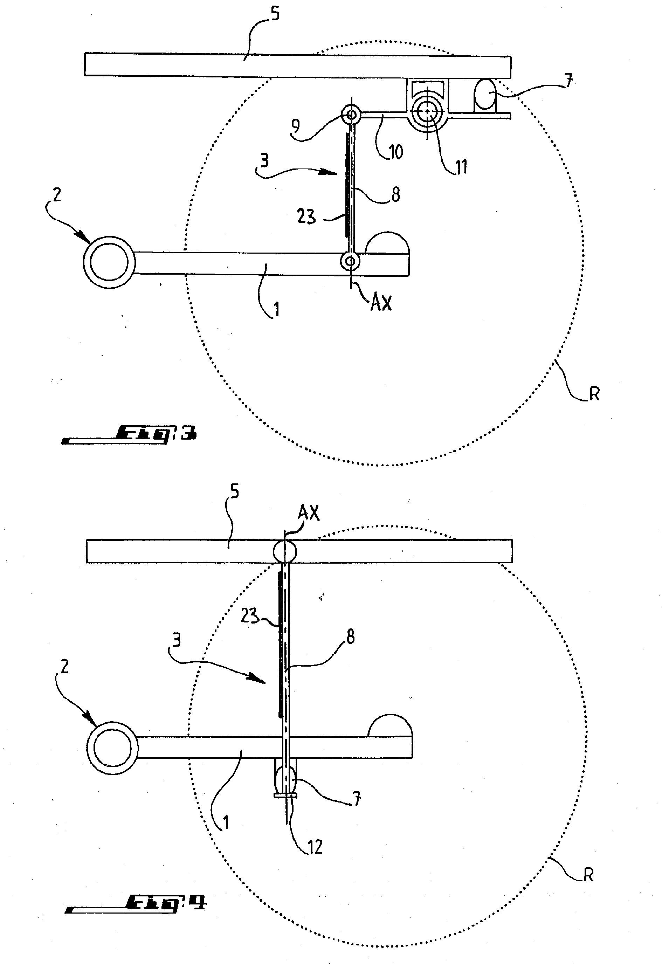

Les figures 1 et 2 représentent schématiquement une suspension de roue d'un véhicule automobile comprenant d'une manière générale un bras longitudinal de suspension 1 reliant la roue R à la caisse du véhicule et à laquelle le bras 1 est monté pivotant autour d'une articulation 2 pour permettre à la roue R de se débattre dans un plan sensiblement vertical parallèle à la direction longitudinale du véhicule.

Le dispositif formant butée de détente 3 de l'invention comprend un cylindre 4 dont la partie supérieure est solidaire de la caisse du véhicule, notamment d'un longeron 5 de la caisse du véhicule, un piston 6 monté à coulissement guidé dans le cylindre 4 et un élément élastiquement déformable 7 constituant la butée de détente proprement dite, logé dans le cylindre 4 entre le piston 6 et la paroi de fond inférieure 4a du cylindre 4.

De préférence, l'élément élastiquement déformable 7 est constitué par un corps de révolution à base de caoutchouc ou à base de polyuréthane pouvant se comprimer élastiquement dans le cylindre 4 sous l'action du piston 6 lors du débattement de la roue vers sa position extrême basse de détente.

Le dispositif 3 comprend en outre un lien souple 8 rigide en traction traversant coaxialement le cylindre 4 et l'élément élastiquement déformable 7 et solidaire, par son extrémité supérieure, du piston 6. L'extrémité inférieure du lien 8 est solidaire d'un élément de la masse non suspendue du système de liaison au sol du véhicule, incluant notamment le train arrière du véhicule, qui comprend les bras longitudinaux de suspension et la traverse, et incluant également le support de roue lié au train arrière, qui comprend le porte moyeu et les pivots du porte moyeu.

Selon le mode de réalisation représenté en figure 1, l'extrémité inférieure du lien 8 est solidaire du bras de suspension 1 et s'étend en position de repos, c'est-à-dire lorsqu'il est sensiblement tendu, selon un axe AX.

Comme représenté en figure 1, le cylindre 4 est fixé au longeron 5 de manière à s'étendre perpendiculairement sous celui-ci mais, comme représenté en figure 2, le cylindre 4 peut être solidaire de ce longeron en ayant son axe longitudinal incliné relativement au longeron 5.

Le dispositif formant butée 3 est implanté dans un plan sensiblement parallèle au plan de débattement de la roue R et donc du bras de suspension 1 faisant partie du train arrière du véhicule, afin d'éviter toute démultiplication de ce dispositif avec les diverses technologies de liaisons au sol de la caisse du véhicule. Cette configuration permet de résoudre le problème de taille de la butée de détente de sorte que la longueur de cette dernière peut être augmentée pour mieux gérer le débattement entre la roue et la caisse du véhicule lors des phases de détente.

Le lien souple 8 peut être constitué par une sangle, comme on le verra ultérieurement, ou par un câble, la sangle ou le câble 8 ne se déformant pratiquement pas ou très peu lorsqu'un effort de traction lui est appliqué.

Lors des débattements en détente de la roue, le bras de suspension 1 se déplace vers le bas, relativement aux figures 1 et 2, de façon que le lien 8 se tende pour exercer un effort de traction sur le piston 6 qui comprime l'élément élastiquement déformable 7. La longueur du lien de traction 8 est telle qu'il entre en phase de traction à une valeur bien définie de la détente, fonction de la course de débattement du train arrière du véhicule, afin de ne pas rendre le véhicule trop brutalement réactif, et c'est à cette valeur que la butée de détente 7 commence à se comprimer, permettant la gestion de la détente.

En phase d'attaque, c'est-à-dire lors des débattements en compression de la roue et jusqu'à la valeur susmentionnée de la détente, le dispositif 3 reste inactif.

La figure 1 montre que, lors des débattements en compression (ou attaque) de la roue, le lien 8 se déforme en lacet ou en accordéon.

Selon l'invention, le lien souple 8 coopère avec un élément élastique 23 permettant au lien 8 de se rétracter dans un volume restreint autour de son axe AX lors des débattements en attaque de la roue. Ainsi, lors d'un débattement en attaque, le lien 8 présente la configuration 8a, illustré en trait interrompu sur la figure 1, en coopérant avec l'élément élastique 23. Sans cet élément élastique 23, le lien 8 occuperait la configuration 8b, illustré en trait interrompu sur la même figure 1. Dans la configuration 8a, le lien 8 se situe dans un volume restreint prédéterminé autour de l'axe AX, afin que ledit lien ne rentre pas en contact avec les éléments environnants. Dans la configuration 8b, le lien 8 s'étend transversalement à l'axe AX à une distance suffisamment grande pour risquer de percuter des éléments environnants, voire de se coincer et de se rompre.

Le lien souple 8, lorsque comprimé en coopérant avec l'élément élastique, peut tenir dans le volume d'un cylindre d'un diamètre prédéterminé, par exemple de 50 millimètres de diamètre et de 50 millimètres de hauteur.

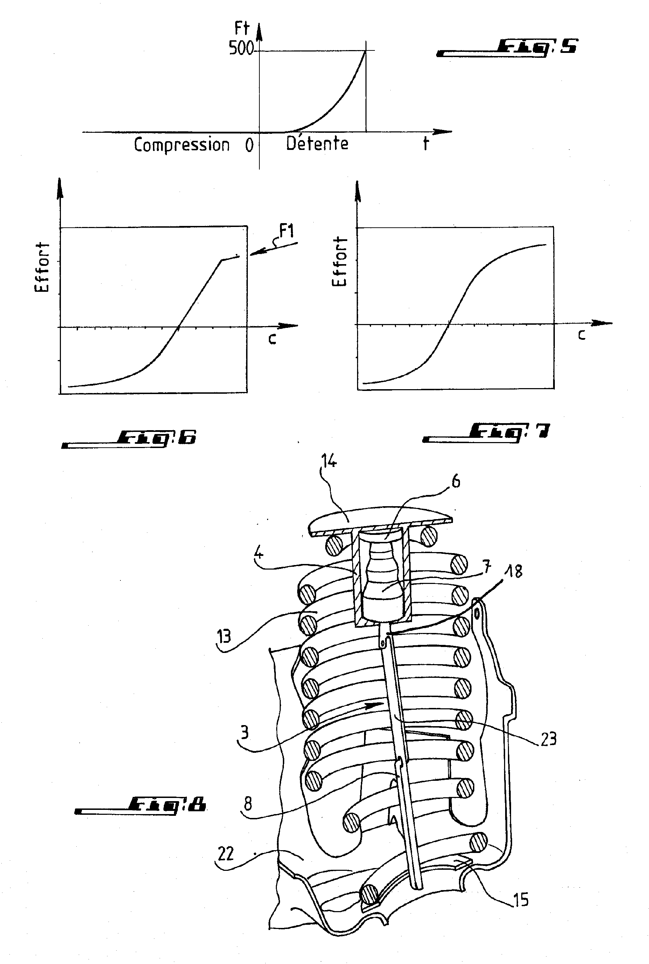

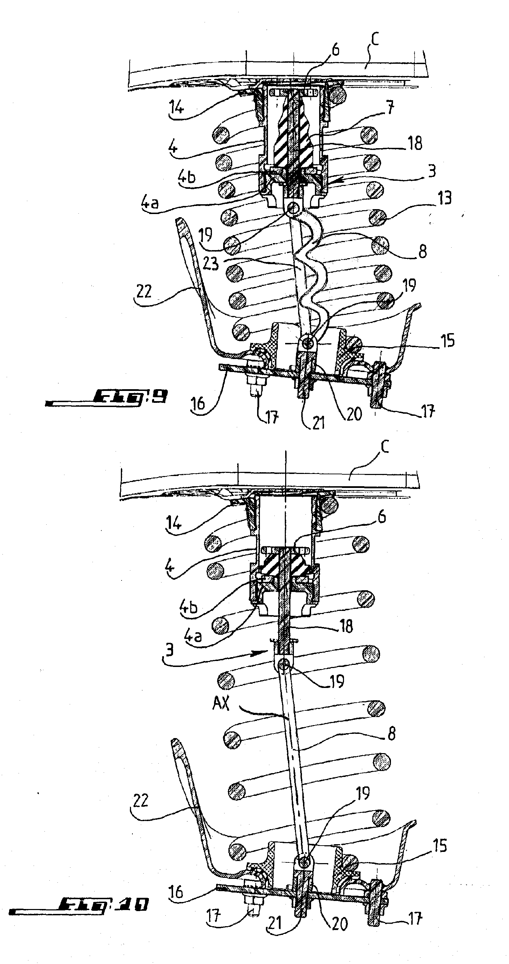

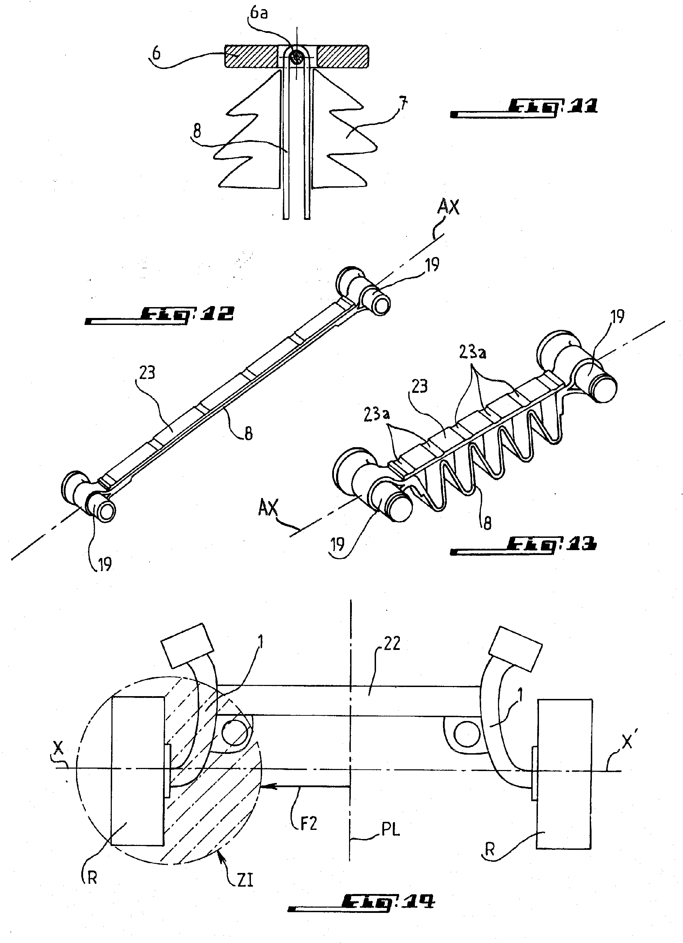

La figure 5 montre la courbe représentant l'effort de traction Ft exercé par le lien 8 en détente et qui augmente progressivement pour atteindre une valeur maximale, par exemple de 500 daN. En statique, le dispositif doit pouvoir résister avantageusement à deux fois l'effort maximal de traction exercé sur le lien 8, dans le cas présent 1000 daN et l'ensemble du système ne doit pas se déformer sous l'effort maximal.

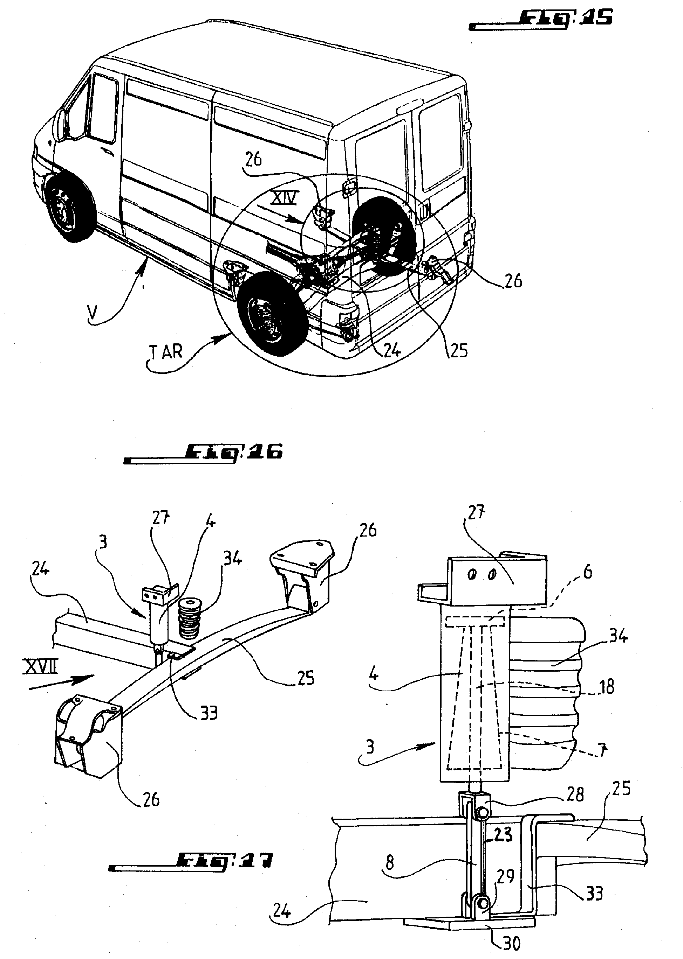

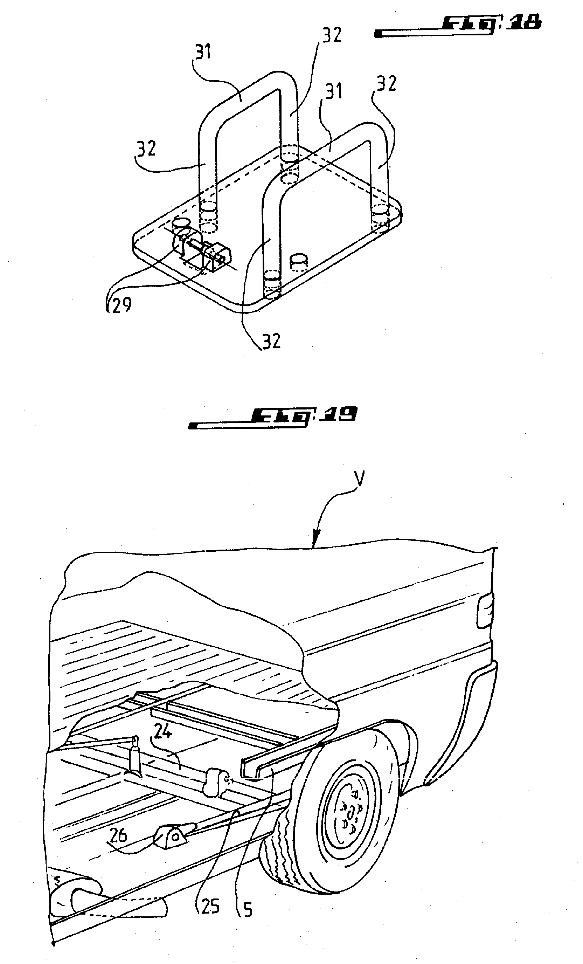

La figure 6 représente la course de débattement c d'une roue ou d'un train arrière de l'art antérieur en attaque et en détente. Cette courbe montre qu'il n'y a pas ou très peu d'amortissement de la butée de détente de l'art antérieur, celle-ci intervenant très tard dans la course à l'emplacement indiqué par la flèche F1 sur cette figure. La figure 7 montre le débattement d'une roue ou d'un train arrière pourvu du dispositif formant butée de détente externe de l'invention. Ainsi, la gestion de la détente par le dispositif de l'invention permet d'obtenir une courbe tangente à la course de détente et d'arrondir la queue de courbe comme représenté à cette figure, de façon identique au débattement en attaque de ce train.

Selon le mode de réalisation représenté en figure 3, le lien souple résistant à la traction 8 du dispositif formant butée 3 est solidaire par l'une de ses extrémités du bras de suspension 1 tandis que son extrémité opposée est reliée articulée en 9 à l'extrémité d'un bras de levier 10 monté pivotant en 11 sous le longeron 5 suivant un axe de pivotement s'étendant transversalement à ce longeron. L'élément élastiquement déformable 7 est disposé entre l'extrémité opposée du bras de levier 10 et le longeron 5. Par exemple, l'élément élastiquement déformable 7 peut être solidaire de l'extrémité libre du bras de levier 10, opposée à l'extrémité reliée à l'articulation 9.

Lors des débattements en détente de la roue, le lien 8 exerce une traction à l'extrémité du bras de levier 10, reliée à l'articulation 9, pour le faire pivoter autour de l'axe 11 dans le sens contraire des aiguilles d'une montre par rapport à la figure 3, de façon que l'extrémité libre du bras de levier 10 exerce un effort de compression de l'élément élastiquement déformable 7 entre ce bras et le longeron 5.

Selon le mode de réalisation représenté en figure 4, le lien souple 8 du dispositif formant butée 3 est solidaire à l'une de ses extrémités du longeron 5, tandis que son extrémité opposée inférieure comporte une plaque 12 pouvant venir en appui, lors des débattements en détente de la roue, sur l'extrémité inférieure de l'élément élastiquement déformable 7 fixé sous le bras de suspension 1. Ainsi, lors de ces débattements, le pivotement vers le bas du bras de suspension 1 tend le lien 8 qui exerce une traction vers le haut sur la plaque 12 pour qu'elle comprime l'élément élastiquement déformable 7 entre la plaque 12 et le bras de suspension 1.

Bien entendu, à part les différences de structure des dispositifs formant butée 3 des figures 3 et 4, chacun de ces dispositifs se comporte dynamiquement comme celui des modes de réalisation des figures 1 et 2.

Les figures 8 à 10 représentent l'implantation du dispositif formant butée de détente 3 sur un train arrière à traverse déformable d'un véhicule automobile.

Ce train arrière est pourvu de chaque côté de celui-ci d'un ressort de suspension 13 interposé entre une coupelle supérieure 14 solidaire de la caisse C du véhicule et d'une coupelle inférieure 15 réalisée, par exemple, en une matière plastique rigide solidaire d'une plaque de coupelle 16 fixée à l'essieu par l'intermédiaire de trois boulons 17, dont deux sont représentés, soudés à cet essieu.

Avantageusement, le dispositif formant butée de détente 3 est logé dans le ressort de suspension 13. Il s'agit d'un environnement extrêmement restreint, où il est important de contrôler la compression du lien 8 au moyen de l'élément élastique 23.

Ce dispositif comprend, de façon similaire à celui de la figure 1, un cylindre 4 en forme de cartouche solidaire de la coupelle supérieure 14 en s'étendant vers le bas à partir de celle-ci, un piston 6 pouvant coulisser de façon guidée dans le cylindre 4 et un élément élastiquement déformable 7 logé dans le cylindre 4 entre le piston 6 et la paroi inférieure 4a de fermeture du cylindre 4. Comme représenté, l'élément élastiquement déformable 7 est constitué par un corps de révolution de forme approximativement conique dont la base est en appui sur la paroi inférieure 4a par l'intermédiaire d'une entretoise 4b.

Le piston 6 est solidaire de l'extrémité supérieure d'une tige 18 traversant l'élément élastiquement déformable 7 et la paroi inférieure 4a du cylindre 4 coaxialement à ce dernier en faisant saillie à l'extérieur de ce cylindre. La tige 18 assure un bon guidage en translation du piston 6.

Le lien souple résistant à la traction 8 est fixé, par l'intermédiaire d'un axe 19, à l'extrémité libre inférieure de la tige 18 du piston 6, tandis que l'extrémité opposée de ce lien est fixée, par l'intermédiaire d'un autre axe 19, à une entretoise 20 solidaire de la plaque de coupelle inférieure 16 par l'intermédiaire d'une vis de fixation 21.

La référence 22 porte sur la traverse déformable du train arrière et dont les extrémités sont solidaires respectivement de deux bras longitudinaux de suspension 1 comme représenté en figure 14.

Ainsi, le cylindre 4 en forme de cartouche est placé dans le plan parallèle au débattement du demi-train et est mis en place à l'intérieur du ressort de suspension 13 constituant un emplacement non utilisé, c'est-à-dire "mort", de sorte que le dispositif formant butée de détente 3 n'interfère pas avec les autres éléments de ce train.

Comme représenté en figure 9, le lien 8 reste inactif lors des débattements en attaque du train arrière en se déformant à la manière d'un accordéon ou d'un lacet tandis que ce lien permet la transmission des efforts en traction pour comprimer l'élément élastiquement déformable 7 lors des débattements en détente de ce train comme représenté en figure 10.

De préférence, la sangle est l'élément mécanique de traction le plus adapté au dispositif formant butée de détente de l'invention et est liée à l'élément élastiquement déformable 23 s'allongeant élastiquement lors des efforts de traction exercés sur la sangle 8 pendant le débattement en détente de la roue comme représenté en figure 12 et permettant à la sangle 8, lors des débattements en compression de la roue, de se rétracter à la manière d'un accordéon dans un volume restreint et contrôlé comme représenté en figure 13.

La sangle 8 peut être constituée d'un tressage de fils de différentes matières afin d'assurer une excellente résistance à la traction de cette sangle.

Comme représenté à la figure 13, l'élément élastique 23 est préférentiellement formé d'une bande en matière élastique, s'étendant sur tout ou partie du lien 8, et présentant au moins deux, avantageusement plusieurs, zones 23a fixées sur ledit lien 8, lesdites zones 23a étant espacées le long du lien 8.

Le nombre de zones 23a de l'élément élastique 23 et l'espacement entre lesdites zones 23a sont prédéterminés afin que le lien 8 puisse tenir, en position rétractée, dans un volume cylindrique centré sur l'axe AX de diamètre prédéterminé ; ledit diamètre étant fonction de l'environnement extérieur, comme par exemple le diamètre interne du ressort de suspension 13.

Dans le cas d'une sangle en matière tressé, les zones 23 peuvent être cousues sur ladite sangle 8.

Dans le cas d'une sangle ou câble en acier, l'élément élastique peut être collé par tout moyen connu de l'homme du métier.

Selon une variante de réalisation représentée en figure 11, le lien souple 8, tel que la sangle, est relié directement au piston 6 en passant autour d'un axe 6a solidaire de ce piston.

Comme pour les modes de réalisation des figures 1 à 4, la butée proprement dite 7 est comprimée lors du débattement en détente de la roue et lors du débattement en compression, cette butée ne subit aucune perturbation du fait que la liaison par sangle 8 ne transmet les efforts qu'en traction. Bien entendu, la butée 7 des figures 8 à 10 peut également être réalisée en un matériau à base de caoutchouc ou à base de polyuréthane.

La figure 14 représente le train arrière à traverse déformable sur lequel est implanté le dispositif formant butée de détente de l'invention. Cette figure met en relief une zone d'implantation optimum ZI de ce dispositif constituée par une partie hâchurée en traits mixtes et correspondent approximativement à la moitié d'un cercle en étant centré le plus possible par rapport à l'axe XX' passant par les centres des roues arrière R. Cette zone d'implantation optimum ZI doit en outre être écartée le plus possible du plan médian longitudinal PL du véhicule comme indiqué par la flèche F2 représentant cette distance d'écartement optimum.

Les figures 15 à 19 représentent l'implantation du dispositif formant butée de détente externe de l'invention sur un train arrière rigide TAR d'un véhicule V.

Ce train arrière TAR comprend une traverse rigide 24 dont les extrémités sont reliées respectivement à deux ressorts à lame 25 s'étendant longitudinalement au véhicule V et dont les extrémités sont reliées à la caisse du véhicule par des chapes de fixation 26.

Dans ce genre de train arrière, il n'y a pratiquement pas de débattement aux extrémités de chaque ressort de suspension à lame 25, de sorte que le dispositif formant butée de détente 3 est avantageusement disposé au niveau de la traverse 24 et d'un ressort de suspension à lame 25 comme cela est clairement représenté aux figures 16 et 17.

Le dispositif formant butée de détente 3 est du type décrit notamment aux figures 9 et 10, mais il est bien entendu que ce dispositif peut être du type décrit dans les autres modes de réalisation.

Ainsi, le dispositif formant butée de détente 3 comprend un cylindre 4 en forme de cartouche dont l'extrémité supérieure est solidaire d'un longeron 5 de la caisse du véhicule par l'intermédiaire d'une équerre de fixation 27 fixée au longeron 5 par l'intermédiaire de boulons, non représentés. Le cylindre 4 peut être fixé à la presse dans le perçage correspondant de l'équerre de fixation supérieure 26.

Le dispositif comprend en outre un piston 6 monté à coulissement guidé dans le cylindre 4 et solidaire d'une tige de piston 18 traversant coaxialement l'élément élastiquement déformable 7 constituant la butée de détente proprement dite réalisée en un matériau à base de caoutchouc ou à base de polyuréthane et dont l'extrémité inférieure faisant saillie du cylindre 4 est reliée par une chape 28 à l'extrémité d'une sangle 8 constituant le lien souple résistant à la traction. L'extrémité inférieure opposée de la sangle 8 est fixée à une chape 29 solidaire d'une plaque rigide 30 fixée sous la traverse 24 en débordant de celle-ci, de manière que la chape 29 soit située à l'extérieur de la traverse 24.

La plaque 30 est fixée à la traverse rigide 24 par l'intermédiaire de deux étriers 31 posés sur la traverse 24 et dont les branches parallèles 32 traversent la plaque 30 et sont solidaires de celles-ci par des écrous de blocage de la plaque 30 sous la traverse 24.

Une pièce en équerre 33 est solidaire de la plaque 30 en étant en appui sur le ressort à lame 25.

La référence 34 concerne la butée d'attaque, connue en soi.

Le dispositif formant butée de détente 3 se trouve en quelque sorte à l'aplomb de la partie en angle droit reliant la traverse 24 au ressort à lame de suspension 25.

Lors des débattements en détente de la suspension, un effort de traction vers le bas est exercé sur le lien 8 qui se tend pour exercer à son tour un effort de traction sur le piston 6 qui comprime l'élément élastiquement déformable 7 dans le cylindre 4.

Le dispositif formant butée de détente de l'invention peut être installé sur un véhicule à suspension hydraulique, pneumatique ou mécanique, sur un train arrière multi-bras, semi-rigide ou rigide. Les essais ont montré que ce dispositif était utilisable quel que soit le type de train du véhicule.

L'avantage du dispositif de l'invention est d'offrir aux véhicules à suspension mécanique, en opposition aux véhicules à suspension hydraulique, une plage de fonctionnement de plus grande amplitude, réglée et gérée par les éléments mécaniques de ce dispositif. Ainsi, le véhicule ne subit plus les contraintes liées aux inerties lors de passages du véhicule dans des virages ou de freinages d'urgence, le centre de gravité du véhicule est plus haut. Lors du passage du véhicule dans une courbe serrée, ou à grande vitesse, les roues côté intérieur du virage, sans le dispositif formant butée de détente externe, pousse la caisse du véhicule vers le haut, le centre de gravité de celui-ci montant jusqu'au décollement des roues. Dans ces conditions, la tenue du véhicule n'est assurée que par trois voire même deux roues de celui-ci. Dans le cas où le véhicule est doté du dispositif formant butée de détente externe de l'invention, l'effort des roues intérieures sur le sol est amorti, ce qui empêche la caisse de se soulever avec la même amplitude. Le centre de gravité du véhicule reste à la même position et a tendance à descendre. La prise de roulis du véhicule est diminuée et les quatre roues restent en appui sur le sol. Autrement dit, le dispositif de l'invention assure le maintien de la caisse du véhicule en roulis. De même, lors d'un freinage d'urgence du véhicule, ce dernier plonge en l'absence du dispositif formant butée de détente de l'invention, pouvant entraîner le décollement des roues arrière de ce véhicule. En cas de freinage d'urgence d'un véhicule pourvu du dispositif de l'invention, et pour une décélération moyenne de ce véhicule, ce dernier plonge beaucoup moins et assure l'adhérence des quatre roues sur le sol.

Le dispositif formant butée de détente externe de l'invention assure une excellente dirigeabilité du train arrière d'un véhicule ainsi qu'une adhérence plus importante des roues de celui-ci. Enfin, le dispositif de l'invention garantit l'absence de phénomène parasite lors des phases d'attaque et agit simplement et uniquement lors des phases de détente de la suspension du véhicule.

## Revendications

1. Dispositif formant butée de détente d'une suspension d'un véhicule notamment automobile, comprenant un élément élastiquement déformable (7) disposé dans le soubassement de la caisse du véhicule, comprenant un lien souple (8) interposé selon un axe (AX) entre la caisse du véhicule et un élément (1 ; 22) de la masse non suspendue du système de liaison au sol du véhicule, **caractérisé en ce que** le lien souple (8) est apte à exercer un effort de traction sur un moyen (6;10;12) comprimant l'élément élastiquement déformable (7) lors des débattements en détente de la roue (R) du véhicule et **en ce que** le lien souple (8) est associé à un élément élastique (23) permettant au lien (8) de se rétracter dans un volume restreint prédéterminé autour de son axe (AX) lors des débattements en attaque de la roue (R) et de s'allonger lors de la traction exercée par le lien (8) sur le moyen (6) de compression de l'élément élastiquement déformable (7) lors des débattements en détente de la roue.

2. Dispositif selon la revendication 1, **caractérisé en ce que** l'élément élastique (23) est formé d'une bande en matériau élastique, s'étendant sur tout ou partie du lien (8), et présentant au moins deux zones de fixation (23a) espacées sur ledit lien (8).

3. Dispositif selon la revendication 2, **caractérisé en ce que** le lien (8) est constitué d'un tressage de fils, lesdites zones (23a) de l'élément élastique (23) étant cousus sur ledit lien (8).

4. Dispositif selon l'une des revendications précédentes, **caractérisé en ce que** le lien souple (8) est une sangle ou un câble en acier.

5. Dispositif selon l'une quelconque des revendications 2 à 4, **caractérisé en ce que** le nombre de zones (23a) de l'élément élastique (23a) et l'espacement entre lesdites zones (23a) sont prédéterminés afin que le lien (8) puisse tenir, en position rétractée, dans un volume cylindrique centré sur l'axe (AX) de diamètre prédéterminé.

6. Dispositif selon l'une quelconque des revendications précédentes, **caractérisé en ce que** le lien souple (8) occupe une position détendue rétractée, approximativement en lacet ou en accordéon, lors des débattements en attaque de la roue et se tend à une valeur déterminée de la détente de la roue à laquelle l'élément élastiquement déformable (7) doit commencer à se comprimer.

7. Dispositif selon la revendication 6, **caractérisé en ce que** la valeur déterminée est fonction de la course de débattement du train arrière du véhicule.

8. Dispositif selon l'une quelconque des revendications précédentes, **caractérisé en ce que** l'élément élastiquement déformable (7) est disposé dans un plan sensiblement parallèle au plan de débattement de la roue (R).

9. Dispositif selon l'une quelconque des revendications précédentes, **caractérisé en ce que** l'élément élastiquement déformable (7) est un corps de révolution en matériau élastiquement déformable à base de caoutchouc ou à base polyuréthane.

10. Dispositif selon l'une des revendications précédentes, **caractérisé en ce qu'**il comprend également un cylindre (4) solidaire de la caisse du véhicule, notamment d'un longeron (5) de la caisse du véhicule, un piston (6) monté à coulissement dans le cylindre (4) et constituant le moyen de compression de l'élément élastiquement déformable (7) qui est logé dans le cylindre (4) entre le piston (6) et la paroi de fond inférieure (4a) du cylindre (4).

11. Dispositif selon la revendication 10, **caractérisé en ce que** le lien (8) traverse le cylindre (4) et l'élément élastiquement déformable (7) en ayant l'une de ses extrémités reliée au piston (6) et son extrémité opposée solidaire de l'élément (1 ; 22) de la masse non suspendue.

12. Dispositif selon la revendication 10, **caractérisé en ce que** le piston (6) est solidaire d'une tige (18) traversant l'élément élastiquement déformable (7) et dont l'extrémité inférieure sortant du cylindre (4) est reliée à l'extrémité correspondante du lien (8).

13. Dispositif selon l'une des revendications 1 à 9, **caractérisé en ce que** le lien (8) est solidaire de la caisse du véhicule, notamment d'un longeron (5) de la caisse, l'élément élastiquement déformable (7) est fixé sous l'élément (1) de la masse non suspendue, et le moyen de compression de l'élément élastiquement déformable (7) est constitué par une plaque (12) en appui sur l'extrémité inférieure de ce dernier, le lien (8) traversant l'élément élastiquement déformable (7).

14. Dispositif selon l'une des revendications 1 à 9, **caractérisé en ce que** le lien souple (8) est solidaire de l'élément (1) de la masse non suspendue par l'une de ses extrémités et son extrémité opposée est fixée articulée à l'extrémité d'un bras de levier (10) articulé à un longeron (5) de la caisse du véhicule et l'élément élastiquement déformable (7) est disposé entre l'extrémité opposée du bras de levier (10) et le longeron (5), cette extrémité opposée du bras (10) constituant le moyen de compression de l'élément élastiquement déformable (7).

15. Dispositif selon l'une des revendications précédentes, **caractérisé en ce qu'**il est implanté d'un côté du véhicule dans une zone proche du plan vertical passant par l'axe reliant les centres de roues du véhicule et écartée autant que possible du plan médian longitudinal du véhicule.

16. Dispositif selon l'une des revendications précédentes, **caractérisé en ce qu'**il est logé dans un ressort de suspension (13) interposé entre la caisse et l'élément (1 ; 22) de la masse non suspendue.

17. Dispositif selon l'une quelconque des revendications précédentes **caractérisé en ce que** l'élément de la masse non suspendue est un bras (1) reliant la roue (R) à la caisse du véhicule ou une traverse déformable (22) d'un train arrière de ce véhicule.

18. Dispositif selon l'une des revendications 1 à 13, **caractérisé en ce qu'**il est implanté entre la caisse du véhicule et une traverse (24) d'un train arrière rigide à proximité de la liaison de la traverse (24) à un ressort à lame de suspension (25) de ce véhicule.

19. Véhicule notamment automobile dont le train arrière est équipé d'au moins un dispositif formant butée de détente tel que défini dans l'une quelconque des revendications précédentes.
